# EUROPEAN PATENT APPLICATION

(11) **EP 4 037 058 A1**
(43) Date of publication of application: **03.08.2022**
(21) Application number: 19934361.7
(22) Date of filing: 06.11.2019
(51) Int. Cl.: H01M 10/42

(54) **SMART TEMPERATURE-MEASUREMENT SYSTEM AND METHOD FOR CONTAINER-TYPE ENERGY-STORAGE BATTERY MODULE**

(30) Priority: 23.09.2019 CN 201910897116
(71) Applicant: Optim (Shanghai) New Energy Co., Ltd., Changning District Shanghai 201103 (CN)
(72) Inventor: SHANG, Dehua, Shanghai 201103 (CN); JIA, Wei, Shanghai 201103 (CN); LIU, Dian, Shanghai 201103 (CN)
(74) Representative: Jannig & Repkow Patentanwälte PartG mbB
(86) International application number: PCT/CN2019/115904
(87) International publication number: WO 2021/056698

(57) **Abstract**

The present invention discloses an intelligent temperature monitoring system for containerized energy storage modules and operation method thereof, comprising a temperature measurement device, system hardware and system software, the temperature measurement device is provided in a central position of an energy storage container, the temperature measurement device comprises a sensor, harmonic synchronous motors, synchronizing wheels, a synchronizing belt, stopper plates, motor supports, a main bearing seat, a duplex bearing, a main rotating shaft, a fixing plate, a rotating cable joint box, fixing screw rods, control power and a pedestal; the system hardware comprises an S50LT point sensing temperature probe, a 3D tripod head, a controller, and a monitor background; the system software comprises a scanning control system and a background monitoring software. Taken in conjunction with heating laws of equipment to be measured, and by optimizing scanning strategy, scanning and temperature measurement time is shortened.

## Description

### Technical field

The present invention relates an intelligent temperature measurement system, specifically an intelligent temperature measurement system for containerized energy storage battery modules and operation method thereof, which belongs to power equipment monitoring technical field.

### Background art

Battery energy storage system is effective in load shifting, emergency and standby and electrical power quality improvement. Lithium-ion batteries become gradually a kind of battery of the widest application among battery energy storage systems due to a big energy density, high output power, charge and discharge longevity, wide operating temperature range and minor local action. In the meantime, with the development of application requirements on battery power storage, fast building and being mobile are new requirements desired by a party in demand, that is when containerized lithium-ion energy storage system appeared.

Containerized lithium-ion energy storage is a kind of power equipment, enclosing a plurality of battery packs, center control cabinets, convergence boxes, energy storage two way convertors, and cooling system for battery pack heat dissemination in a metallic or nonmetallic container, wherein, iron phosphate battery cell module is a core part, characterized in good heat stability, high weight specific energy, no memory effect, being cleaning and environment friendly, long circulation life and low local action.

Although lithium-ion batteries exhibit excellent properties, when abused in a overheat, overcharge or short circuit condition, lithium-ion batteries are liable to thermal runaway due to internal heat accumulation, which may result in a fire hazard. Resulting from limitations by weight specific energy and space, containerized energy storage boxes are usually densely arranged, and no staff is monitoring in a real time basis working status in the containers. Consequently, once a fire hazard happens due to thermal runaway of a battery in the battery cabinets, and fire extinguishing and temperature control is not timely done, fire tends to spread between battery modules, battery cabinets and even between energy storage containers, and causes serious fire and explosion accident, posing tremendous threat to personnel, property and safety. Therefore, it is of great significance to monitor temperature of energy storage containers and prevent fire hazard beforehand.

At present, temperature monitoring system of energy storage containers is done by deploying a local server and acquiring temperature by wireless temperature transducers, which are connected to the server, and at site, a large amount of communication network is used, which is complicated to deal with, and as a result of local server disposition, as once a server error happens, equipment monitor of the entire system will lapse, it is necessary to have a specialized person to maintain stable and reliable running of the data server in 24 hours, which brings a high expense. Moreover, it is only possible for staff of the temperature monitoring system to view data in relatively fixed positions.

### Summary of the invention

Purpose of the present invention is to provide a more intelligent, systemized, and efficient temperature monitoring strategy, that is, the present invention provides an intelligent temperature measurement system for containerized energy storage battery modules outside cell modules and operation method thereof, which will provide a standby protection for containerized energy storage battery temperature monitoring once internal cell communication and temperature monitoring system fails or cannot collect data timely.

The present invention realizes the above-mentioned purpose by the following technical design: an intelligent temperature monitoring system for containerized energy storage modules, comprising a temperature measurement device, system hardware and system software, the temperature measurement device is provided in a central position of an energy storage container, the temperature measurement device comprises a sensor, harmonic synchronous motors, synchronizing wheels, a synchronizing belt, stopper plates, motor supports, a main bearing seat, a duplex bearing, a main rotating shaft, a fixing plate, a rotating cable joint box, fixing screw rods, control power and a pedestal;

The sensor is provided with linking rods to be placed into the stopper plates, the stopper plates are connected to a sensor nestling plate; the harmonic synchronous motors are provided to be two, one of the harmonic synchronous motors is connected to one of the motor supports provided to a lower end surface of the sensor nestling plate, and another harmonic synchronous motor is provided to another motor support provided on a side of the main bearing seat by bolts; the sensor and the harmonic synchronous motors are transmissively communicated by the synchronous wheels and the synchronous belt, the main rotating shaft and the harmonic synchronous motors are transmissively communicated by the synchronous wheels and the synchronous belt; the main bearing seat is provided beneath the sensor, the duplex bearing is sleeved onto the main rotating shaft with an upper end of the main rotating shaft sleeved in a through-hole provided in a center of the main bearing seat by the duplex bearing; a bottom of the main rotating shaft is provided on an upper surface of the fixing plate by fitting screws, the rotatable cable joint box is provided in a through-hole provided in a center of the fixing plate; the fixing plate is connected to the pedestal by the fixing screw rods, and the control power is provided on the pedestal;

The system hardware comprises an S50LT point sensing temperature probe, a 3D tripod head, a controller, and a monitor background; the system software comprises a scanning control system and a background monitoring software. Furthermore, by constituting a temperature measurement and scanning platform with the S50LT point sensing temperature probe and the 3D tripod head, the system hardware scans and senses temperature mechanically, by "temperature measurement and scanning terminals and an on-site monitoring platform", the scanning control system of the system software builds a control network structure.

Further, the temperature measurement device determines location with high precision mechanically by the harmonic synchronous motors.

Further still, the temperature measurement device realizes communication control over a plurality of temperature measurement terminals of the monitor background among the system hardware by a RS485 bus; task assignment, data recording and data inquiry is done by a monitoring platform, which can also realize remote control over the temperature measurement terminals by a local area network.

Still further, the scanning control system of the system software is of a hierarchical structure with three layers, wherein, an uppermost layer consists of a communication module; intermediate layer a control layer and lowermost layer a sensor layer.

As a further solution of the present invention, a main frame of the scanning control system among the system software realizes drive control by "a stepped motor with harmonic drive and a zero position photoelectric switch", and the stepped motor with harmonic drive is a low speed direct drive stepper motor which combines harmonic drive and stepper motors based on the "mechanical and electrical integration" law.

As a further solution of the present invention, the monitor background of the system hardware is a background monitor center of a high pressure capacitor bank automatic temperature measurement and scanning system, and ARM11 embedded system is used in a hardware platform that a monitor platform system runs on.

As a further solution of the present invention, function modules of the monitor background consist of three aspects: first, providing a human-computer interface and a visible interface to respond to human operations; second, conducting task control by making temperature measurement and scanning terminal planning, acquiring terminal status and assigning tasks; third, data processing, recording measurement data and transfer to an EMS platform. Combine an ARM11 hardware structure of the on-site monitoring platform, adopt a Win CE 6.0 R3 operating system, use VS2008C# integrated development environment for software development, provide automatic running, manual running, and parameter setting modules in a function page, wherein, during automatic running, all the terminals are installed and set a script to carry out temperature measurement tasks automatically; manual running is always used for commissioning, to control action of the terminals directly, and acquire real-time temperature; by the parameter setting module, there is an interface to modify and save running parameters of all the terminals at site.

As a further solution of the present invention, a MINI6410 control panel and a SAMSUNG S3C6410 processor are used for the scanning control system of the system software, which is also provided with a 4-wire resistive touch screen module, and common ports such, a 100M standard network port and an infrared receiver port, in addition, a plenty of interfaces can be extracted such as 3 Channel ADC, 1 Channel DAC, standby batteries, AD variable resistors, 8 push buttons (extractable) and 4 LEDs.

Operation method of intelligent temperature measurement system for containerized energy storage battery modules, comprising the following steps:
Step 1: disposing the temperature measurement device in a central position of the energy storage container, setting a scanning area 1 with a battery pack 1 in the energy storage container as initiating point X, Y, width of the battery pack to be W, and height thereof H, and providing position of the battery pack N to be scanning area 2-N.
Step 2: driving the harmonic synchronous motors with the scanning control system in the system software, so as one of the harmonic synchronous motors rotates the main bearing seat of the temperature measurement system to realize a horizontal movement of the sensor, and another harmonic synchronous motor moves the sensor vertically to realize temperature measurement to multiple points of equipment to be measured.
Step 3: sending data collected by the S50LT point sensing temperature probe on the sensor to the EMS platform by the monitor background in the system hardware.
Step 4: finally, the monitor background in the system hardware controls a plurality of the temperature measurement devices for energy storage containers, stores measurement data and provides on-site data inquiry. Beneficial effects of the present invention: the intelligent temperature measurement system for containerized energy storage battery modules and operation method thereof is of reasonable design; by calculating heating faults of the containerized energy storage system, and measuring on-site temperature, it is observed that common heating positions in a container are bus bar joints, safety fuses, cell modules, and sleeve joints, where over 90% of heating happens, taken in conjunction with heating laws of equipment to be measured, and by optimizing scanning strategy, scanning and temperature measurement time is shortened, and by monitoring key positions of the equipment by setting a scanning area, it is possible to get heating conditions of the equipment and save scanning and temperature measurement time substantially.

### Brief description of the drawings

Figure 1 is a schematic diagram of a temperature measurement device according to the present invention.
Figure 2 is a schematic diagram of a control flow of the present invention.
Figure 3 is a schematic diagram of a time-sharing control flow according to the present invention.

In the drawings: 1. Sensor; 2. Harmonic synchronous motor; 3. Synchronous wheel; 4. Synchronous belt; 5. Stopper plate; 6. Motor support; 7. Main bearing seat; 8. Duplex bearing; 9. Main rotating shaft; 10. Fixing plate; 11. Rotatable cable joint box; 12. Fixing screw; 13. Control power and 14. Pedestal.

### Embodiments

In the following part, a clear and complete description will be given to technical solutions of embodiments of the present invention, and apparently, the embodiments described are merely some embodiments of the present invention, rather than all. Based on embodiments provided in the present invention, all other embodiments that one of ordinary skill in the art obtains without involving creative effort fall within protection scope of the present invention.

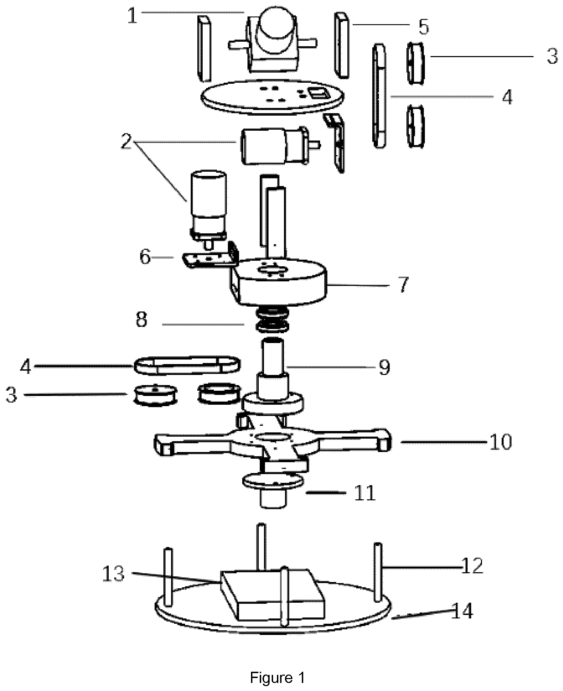

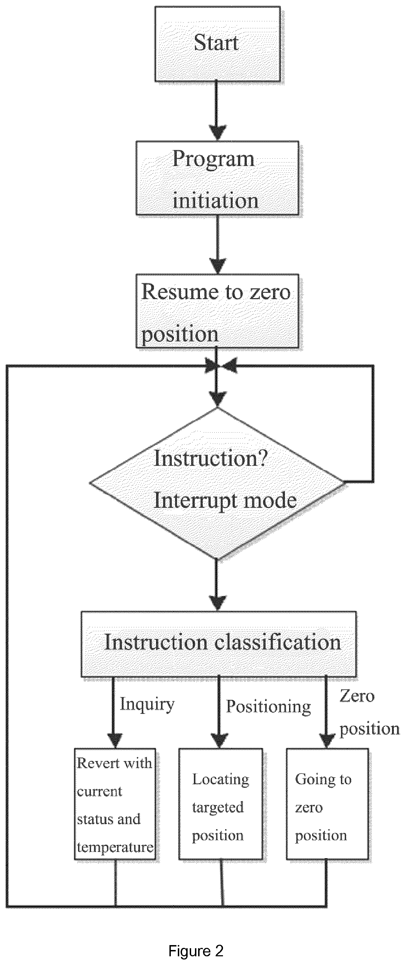

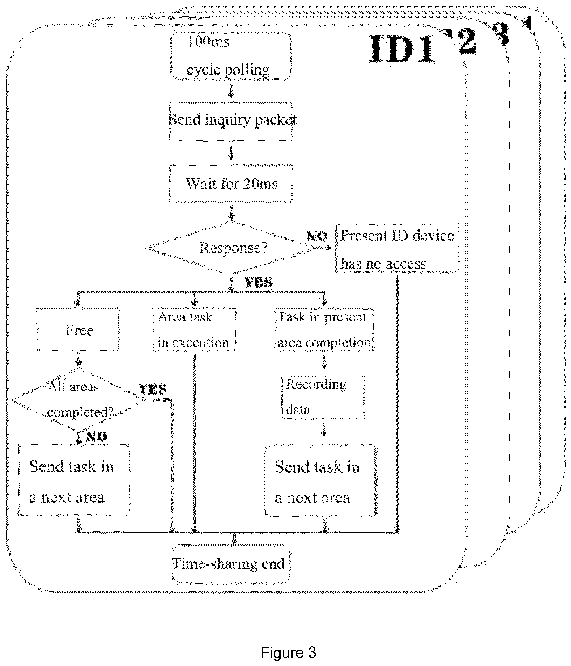

Please refer to figure 1 to figure 3, an intelligent temperature measurement system for containerized energy storage battery modules, comprises a temperature measurement device, system hardware and system software, wherein, the temperature measurement device is provided in a central position of an energy storage container, the temperature measurement device comprises a sensor 1, harmonic synchronous motors 2, synchronous wheels 3, a synchronous belt 4, stopper plates 5, motor supports 6, a main bearing seat 7, a duplex bearing 8, a main rotating shaft 9, a fixing plate 10, a rotating cable joint box 11, fixing screw rods 12, a control power 13 and a pedestal 14.

Both sides of the sensor 1 is provided with linking rods to have the sensor fixed into the stopper plates 5; the stopper plate 5 is vertically connected to a sensor nestling plate; the harmonic synchronous motors 2 are provided to be two, and one of the harmonic synchronous motors 2 is connected to one of the motor supports 6 provided to a lower surface of the sensor nestling plate, another harmonic synchronous motor 2 is connected to another motor support 6 provided on a side of the main bearing seat 7; the sensor 1 is transmissively communicating with the harmonic synchronous motors 2 by the synchronous wheels 3 and the synchronous belt 4, the main rotating shaft 9 is transmissively communicating with the harmonic synchronous motors 2 by the synchronous wheels 3 and the synchronous belt 4; the main bearing seat 7 is provided beneath the sensor 1, the duplex bearing 8 is sleeved onto the main rotating shaft 9, and an upper end of the main rotating shaft 9 is sleeved in a through-hole provided in a center of the main bearing seat 7, a bottom of the main rotating shaft 9 is connected to an upper surface of the fixing plate 10 by fitting screws, the rotatable cable joint box 11 is provided in a through-hole provided in a center of the fixing plate 10; the fixing plate 10 is connected with the pedestal 14 by the fixing screw rods 12, and the control power 13 is provided on the pedestal 14.

The system hardware comprises four parts, namely an S50LT point sensing temperature probe, a 3D tripod head, a controller, and a monitor background, the system software comprises a scanning control system and a background monitoring software.

Furthermore, in an embodiment of the present invention, by constituting a temperature measurement and scanning platform with the S50LT point sensing temperature probe and the 3D tripod head, the system hardware scans and senses temperature mechanically, and by "temperature measurement and scanning terminals and an on-site monitoring platform", the scanning control system of the system software builds a control network structure, consequently, the monitor platform controls the plurality of temperature measurement terminals and an on-site control network is built in a simple and cheap way.

As a further embodiment of the present application, high precision mechanical positioning is done by the harmonic synchronous motors 2 in the temperature measurement device, and to conduct regional temperature measurement and locate with high precision, temperature measurement area division is done by a numerical control positioning function of the system, and a well-targeted following, monitoring and temperature warning watching strategy is established by a program to realize regional following and monitoring and improve temperature measurement efficiency.

As a further embodiment of the present invention, the temperature measurement device realizes communication control over the plurality of temperature measurement terminals of the monitor background among the system hardware by a RS485 bus; task assignment, data recording and data inquiry is done by the monitoring platform, which can also realize remote control over the temperature measurement terminals by local area network. As a further embodiment of the present invention, the scanning control system of the system software is of a hierarchical structure with three layers, wherein, the uppermost layer consists of a communication module; intermediate layer a control layer, to render the device an X-axis horizontal rotation capacity and a Y-axis vertical rotation capacity and a control panel of the device is provided in the intermediate layer; and the lowermost layer is a sensor layer, to fix the point sensing temperature sensor, and have the sensor rotating along the X-axis and the Y-axis direction, consequently, the hardware system is only to drive the sensor 1, which demands a small moment, and with the harmonic synchronous motors, transmission on the X-axis and the Y-axis is done by the harmonic synchronous motors 2 and the synchronous belt 4.

As a further embodiment of the present invention, a main frame of the scanning control system among the system software realizes drive control by "a stepped motor with harmonic drive and a zero position photoelectric switch", and the harmonic synchronous motor is a low speed direct drive stepper motor which combines harmonic drive and stepper motors based on the "mechanical and electrical integration" law, which uses a microcomputer as a controlling part, by programming sends drive codes showing energizing status of all phases of motor windings in different times, and drives the harmonic synchronous motors 2 with a power amplifier circuit. The harmonic synchronous motors 2 is of high positioning precision, as much as 1:25000, and with the addition of zero position detection of the zero position photoelectric switch, mechanical calibration of the device can be effectively rectified to reduce overall positioning deviation.

As a further embodiment of the present invention, the monitor background of the system hardware is a background monitor center of a high pressure capacitor bank automatic temperature measurement and scanning system, and ARM11 embedded system is used in a hardware platform that a monitor platform system runs on, to control a plurality of container temperature measurement and scanning devices, store temperature measurement data and facilitate on-site inquiry.

As a further embodiment of the present invention, function modules of the monitor background consist of three aspects: first, providing a human-computer interface and a visible interface to respond to human operations; second, conducting task control by making temperature measurement and scanning terminal planning, acquiring terminal status and assigning tasks; third, data processing, recording measurement data and transfer to an EMS platform.

Taken in conjunction the ARM11 hardware structure of the on-site monitoring platform, using Win CE 6.0 R3 operating system, with VS2008C# integrated development environment for software development, providing automatic running, manual running, and parameter setting modules in a function page, wherein, during automatic running, all the terminals are installed and set a script to carry out temperature measurement tasks automatically; manual running is always used for commissioning, to control action of the terminals directly, and acquire real-time temperature; by the parameter setting module, there is an interface to modify and save running parameters of all the terminals at site.

As a further embodiment of the present invention, a MINI6410 control panel and a SAMSUNG S3C6410 processor are used for the scanning control system of the system software, which is also provided with a 4-wire resistive touch screen module, and common ports such, a 100M standard network port and an infrared receiver port, in addition, a plenty of interfaces can be extracted such as 3 Channel ADC, 1 Channel DAC, standby batteries, AD variable resistors, 8 push buttons (extractable) and 4 LEDs, and to improve reliability of temperature measurement and scanning work, it is possible to connect to an EMS platform of the energy storage system by a RS485 interface, and to schedule operation of the temperature measurement and scanning devices. By using a time-sharing inquiry method, operating scanning devices in turn, and conducting temperature measurement tasks, keep collected temperature and position information in an EMS database. Operation method of intelligent temperature measurement system for containerized energy storage battery modules, comprising the following steps:
Step 1: disposing the temperature measurement device in a central position of the energy storage container, setting a scanning area 1 with a battery pack 1 in the energy storage container as initiating point X, Y, width of the battery pack to be W, and height thereof H, and providing position of the battery pack N to be scanning area 2-N.
Step 2: driving the harmonic synchronous motors with the scanning control system in the system software, so as one of the harmonic synchronous motors rotates the main bearing seat of the temperature measurement system to realize a horizontal movement of the sensor, and another harmonic synchronous motor moves the sensor vertically to realize temperature measurement to multiple points of equipment to be measured.
Step 3: sending data collected by the S50LT point sensing temperature probe on the sensor to the EMS platform by the monitor background in the system hardware.
Step 4: finally, the monitor background in the system hardware controls a plurality of the temperature measurement devices for energy storage containers, stores measurement data and provides on-site data inquiry. Working principles: when using the intelligent temperature measurement system for containerized energy storage battery modules and operation method thereof, by calculating heating faults of the containerized energy storage system, and measuring on-site temperature, it is observed that common heating positions in a container are bus bar joints, safety fuses, cell modules, and sleeve joints, where over 90% of heating happens, taken in conjunction with heating laws of equipment to be measured, and by optimizing scanning strategy, scanning and temperature measurement time is shortened. And by monitoring key positions of the equipment by setting a scanning area, it is possible to get heating conditions of the equipment and save scanning and temperature measurement time substantially.

For those skilled in the art, apparently, the present invention is not limited to details in the above exemplary embodiments, and without departing from spirits and basic features of the present invention, there are other specific means to realize the present invention. Therefore, in all aspects, the embodiments shall be viewed as exemplary rather than restrictive, protection scope of the present invention is defined by the appended claims rather than the above description, consequently, all variations falling within meaning and scope of equivalent parts of the claims are included in the present invention. Any drawing reference signs appeared in the claims shall not be construed to be limiting the concerned claims.

Moreover, it shall be understood that, although this specification is described by some embodiments, not each embodiment contains only an independent technical solution. The narration in the specification is only for clarity, and those skilled in the art should regard the specification as a whole. The technical solutions in the embodiments can also be appropriately combined to form other implementations that can be understood by those skilled in the art.

## Claims

1. An intelligent temperature monitoring system for containerized energy storage modules, comprising a temperature measurement device, system hardware and system software, **characterized in that**, the temperature measurement device is provided in a central position of an energy storage container, the temperature measurement device comprises a sensor (1), harmonic synchronous motors (2), synchronizing wheels (3), a synchronizing belt (4), stopper plates (5), motor supports (6), a main bearing seat (7), a duplex bearing (8), a main rotating shaft (9), a fixing plate (10), a rotating cable joint box (11), fixing screw rods (12), control power (13) and a pedestal (14);
The sensor (1) is provided with linking rods to be placed into the stopper plates (5), the stopper plates (5) are connected to a sensor nestling plate; the harmonic synchronous motors (2) are provided to be two, one of the harmonic synchronous motors (2) is connected to one of the motor supports (6) provided to a lower end surface of the sensor nestling plate, and another harmonic synchronous motor (2) is provided to another motor support (6) provided on a side of the main bearing seat (7) by bolts; the sensor (1) and the harmonic synchronous motors (2) are transmissively communicated by the synchronous wheels (3) and the synchronous belt (4), the main rotating shaft (9) and the harmonic synchronous motors (2) are transmissively communicated by the synchronous wheels (3) and the synchronous belt (4); the main bearing seat (7) is provided beneath the sensor (1), the duplex bearing (8) is sleeved onto the main rotating shaft (9) with an upper end of the main rotating shaft (9) sleeved in a through-hole provided in a center of the main bearing seat (7) by the duplex bearing (8); a bottom of the main rotating shaft (9) is provided on an upper surface of the fixing plate (10) by fitting screws, the rotatable cable joint box (11) is provided in a through-hole provided in a center of the fixing plate (10); the fixing plate (10) is connected to the pedestal (14) by the fixing screw rods (12), and the control power (13) is provided on the pedestal (14);
The system hardware comprises four parts, namely an S50LT point sensing temperature probe, a 3D tripod head, a controller, and a monitor background; the system software comprises a scanning control system and a background monitoring software.

2. The intelligent temperature monitoring system for containerized energy storage modules according to claim 1, **characterized in that**, by constituting a temperature measurement and scanning platform with the S50LT point sensing temperature probe and the 3D tripod head, the system hardware scans and senses temperature mechanically, and by "temperature measurement and scanning terminals and an on-site monitoring platform", the scanning control system of the system software builds a control network structure.

3. The intelligent temperature monitoring system for containerized energy storage modules according to claim 1, **characterized in that**, the temperature measurement device determines location with high precision mechanically by the harmonic synchronous motors (2).

4. The intelligent temperature monitoring system for containerized energy storage modules according to claim 1, **characterized in that**, the temperature measurement device realizes communication control over a plurality of temperature measurement terminals of the monitor background among the system hardware by a RS485 bus; and task assignment, data recording and data inquiry is done by a monitoring platform, which can also realize remote control over the temperature measurement terminals by a local area network.

5. The intelligent temperature monitoring system for containerized energy storage modules according to claim 1, **characterized in that**, the scanning control system of the system software is of a hierarchical structure with three layers, among which, an uppermost layer consists of a communication module; an intermediate layer a control layer and a lowermost layer a sensor layer.

6. The intelligent temperature monitoring system for containerized energy storage modules according to claim 1 or claim 5, **characterized in that**, a main frame of the scanning control system among the system software realizes drive control by "a stepped motor with harmonic drive and a zero position photoelectric switch", and the stepped motor with harmonic drive (2) is a low speed direct drive stepper motor which combines harmonic drive and stepper motors based on the "mechanical and electrical integration" law.

7. The intelligent temperature monitoring system for containerized energy storage modules according to claim 1, **characterized in that**, the monitor background of the system hardware is a background monitor center of a high pressure capacitor bank automatic temperature measurement and scanning system, and ARM11 embedded system is used in a hardware platform that a monitoring platform system runs on.

8. The intelligent temperature monitoring system for containerized energy storage modules according to claim 8, **characterized in that**, function modules of the monitor background consist of three aspects: first, providing a human-computer interface and a visible interface to respond to human operations; second, conducting task control by making temperature measurement and scanning terminal planning, acquiring terminal status and assigning tasks; third, data processing, recording measurement data and transfer to an EMS platform;
Combine an ARM11 hardware structure of the on-site monitoring platform, adopt a Win CE 6.0 R3 operating system, use VS2008C# integrated development environment for software development, provide automatic running, manual running, and parameter setting modules in a function page, wherein, during automatic running, all the terminals are installed and set a script to carry out temperature measurement tasks automatically; manual running is always used for commissioning, to control action of the terminals directly, and acquire real-time temperature; by the parameter setting module, there is an interface to modify and save running parameters of all terminals at site.

9. The intelligent temperature monitoring system for containerized energy storage modules according to claim 1, **characterized in that**, a MINI6410 control panel and a SAMSUNG S3C6410 processor are used for the scanning control system of the system software, which is also provided with a 4-wire resistive touch screen module and common ports such as a 100M standard network port and an infrared receiver port, in addition, a plenty of interfaces can be extracted such as 3 Channel ADC, 1 Channel DAC, standby batteries, AD variable resistors, 8 push buttons (extractable) and 4 LEDs.

10. An operation method of intelligent temperature measurement system for containerized energy storage battery modules, comprising following steps:
Step 1: disposing the temperature measurement device in a central position of the energy storage container, setting a scanning area 1 with a battery pack 1 in the energy storage container as initiating point X, Y, width of the battery pack to be W, and height thereof H, and providing position of the battery pack N to be scanning area 2-N;
Step 2: driving the harmonic synchronous motor with the scanning control system in the system software, so as one of the harmonic synchronous motors rotates the main bearing seat of the temperature measurement system to realize a horizontal movement of the sensor, and another harmonic synchronous motor with harmonic drive moves the sensor vertically to realize temperature measurement to multiple points of equipment to be measured;
Step 3: sending data collected by the S50LT point sensing temperature probe on the sensor to the EMS platform by the monitor background in the system hardware;
Step 4: finally, the monitor background in the system hardware controls a plurality of the temperature measurement devices for energy storage containers, stores measurement data and provides on-site data inquiry.
